# EUROPEAN PATENT SPECIFICATION

(11) **EP 2 182 522 B1**
(45) Date of publication and mention of the grant of the patent: **17.05.2017**
(21) Application number: 09252039.4
(22) Date of filing: 21.08.2009
(51) Int. Cl.: G06F 3/0488, G11B 27/034, G11B 27/10

(54) **Information processing**
Informationsverarbeitung
Traitement d'informations

(30) Priority: 28.10.2008 JP 2008276228
(43) Date of publication of application: 05.05.2010
(73) Proprietor: Sony Corporation, Tokyo (JP)
(72) Inventor: Ikeda, Tetsuo, Tokyo (JP); Miyashita, Ken, Tokyo (JP); Nashida, Tatsushi, Tokyo (JP); Matsuda, Kouichi, Tokyo (JP)
(74) Representative: MFG Patentanwälte Meyer-Wildhagen Meggle-Freund Gerhard PartG mbB

(56) References cited:
- EP-A1- 1 830 361
- US-A- 5 513 306
- US-A1- 2008 168 395
- APPLE INC: "Imovie '08 : Getting started" INTERNET CITATION 31 December 2007 (2007-12-31), XP002476846 Retrieved from the Internet: URL:http://manuals.info.apple.com/en/iMovi e_08_Getting_Started.pdf> [retrieved on 2008-04-16]
- DIMITROVA N ET AL: "VIDEO KEYFRAME EXTRACTION AND FILTERING: A KEYFRAME IS NOT A KEYFRAME TO EVERYONE" PROCEEDINGS OF THE 6TH. INTERNATIONAL CONFERENCE ON INFORMATION AND KNOWLEDGE MANAGEMENT. CIKM '97. LAS VEGAS, NOV. 10 - 14, 1997; [PROCEEDINGS OF THE INTERNATIONAL CONFERENCE ON INFORMATION AND KNOWLEDGE MANAGEMENT. CIKM], NEW YORK, ACM, US, vol. CONF. 6, 10 November 1997 (1997-11-10), pages 113-120, XP000775302 ISBN: 978-0-89791-970-8

## Description

### Field of the Invention

The present invention relates to an information processing apparatus, an information processing method, and a program.

### Background of the Invention

With spread of a digital still camera, a digital video camera, and a cell-phone, it becomes easy to photograph a moving picture contents by everyone. Also, with a development of a technique using a network, it becomes possible to distribute the moving picture contents such as movie and music clip, or publicize a private moving picture on the Internet.

In order to view such moving picture contents, there is a method of utilizing a reproducing application for reproducing the moving picture contents. In such a reproducing application, a thumbnail image of a still image regarding a moving picture content is displayed on a display screen. A user selects the moving picture content to be viewed, while viewing the thumbnail image of the still image, which cuts-out information regarding the name and preparation date of the moving picture content and one scene of the moving picture content.

However, only by the thumbnail image of the still image that cuts-out the name of the moving picture contents or one scene of the moving picture contents, the moving picture contents may not be appropriately known in some cases. In order to solve such an issue, Japanese Patent Application Laid-Open No. 2007-267356 as shown below discloses a method of easily selecting the moving picture content by increasing the number of thumbnail images displayed on the display screen, every time the thumbnail image of the still image is selected by using an input device such as a mouse.

However, in the method described in Japanese Patent Application Laid-Open No. 2007-267356, there is an issue that when the moving picture content is desired to be grasped in further detail, the thumbnail image has to be displayed until the content can be grasped by being selected multiple numbers of times, and therefore usability of a user is impaired.

Therefore, embodiments of the present invention have been made in view of the above-described issue, and seek to provide new and improved information processing apparatus, an information processing method, and a program, capable of grasping the moving picture contents with further easy operation without performing reproduction of the moving picture contents.

A video playback apparatus is described in EP-A-1830361 which includes a thumbnail creating unit for creating thumbnail image data for a video file, and a user operation unit for receiving an instruction from a user. The thumbnail creating unit divides a total playback duration time T of the video file into 2^n intervals and creates the thumbnail image data from the first frame of each of the divided intervals.

In "Imovie '08 : Getting started" (APPLE INC - XP002476846) the iMovie '08 video handling software is described.

A portable multifunction device having a touch screen display is described in US-A-2008/0168395 which detects a finger contact with a predefined area on the touch screen display, wherein the predefined area includes an icon that is configured to slide in a first direction in the predefined area on the touch screen display, detects movement of the finger contact on the touch screen display from the predefined area to a location outside the predefined area, wherein the movement of the finger contact on the touch screen display has a component parallel to the first direction and a component perpendicular to the first direction, and slides the icon in the predefined area in accordance with the component of the movement of the finger contact that is parallel to the first direction.
"Video Keyframe Extraction and Filtering: A Keyframe is not a Keyframe to Everyone", by Dimitrova net al. (CIKM '97, Las Vegas) describes the keyframe extraction and filtering process within the content indexing system called Vitamin.
US 5 513 306 discusses a temporal event viewing and editing system.

### Summary of the Invention

Various respective aspects and features of the invention are defined in the appended claims.

According to an embodiment of the present invention, there is provided an information processing apparatus including a display panel on which a plurality of objects of moving picture contents are displayed along a predetermined direction, an input position detecting unit that detects a position of an operator positioned on the display panel, a selected object detecting unit that detects an object selected by the operator, a block division unit that divides content data corresponding to the object detected by the selected object detecting unit into a plurality of blocks and generates an object corresponding to a block top image which is an image positioned at the top of each block, and a display controlling unit that arranges a plurality of block top images in a time order and hierarchically displays them with the selected object as a reference.

According to such a configuration, a display panel displays a plurality of objects of the moving picture contents along a predetermined direction, and the input position detecting unit detects the position of the operator positioned on the display panel. The selected object detecting unit detects an object selected by the operator. The block division unit divides content data corresponding to the object detected by the selected object detecting unit into a plurality of blocks, and generates an object corresponding to the block top image which is an image positioned at the top of each block. The display controlling unit arranges a plurality of block top images in a time order and hierarchically displays them with selected object as a reference.

The selected object detecting unit may preferably detect the block top image selected by the operator, the block division unit may preferably divide the content data corresponding to the block including the selected block top image into further plurality of sub-blocks and generates an object corresponding to the sub-block top image which is an image positioned at the top of each sub-block, and the display controlling unit may preferably arrange a plurality of sub-block top images in a time order and hierarchically displays them with the selected block top image as a reference.

The information processing apparatus may further include a direction detecting unit that detects a moving direction of the operator based on a time variation of the detected position of the operator. The block division unit may start generation of the object corresponding to the block top image or the sub-block top image, when the operator, which selects the object, moves to an area where no object exists in the display panel where a plurality of objects are displayed.

The block division unit may uniformly divide the content data based on the previously set number of blocks.

The block division unit may divide the content data every previously set division time from the top of the content data.

A plurality of objects may be displayed along a lateral direction in the display panel, the block division unit may start generation of the object corresponding to the block top image or the sub-block top image, when the moving direction of the operator, which selects the object, is a vertical direction, and the display controlling unit may display the generated block top image or the sub-block top image in a lower layer of the object along the lateral direction.

A plurality of objects may be displayed along a vertical direction in the display panel, the block division unit may start generation of the object corresponding to the block top image or the sub-block top image, when the moving direction of the operator, which selects the object, is a lateral direction, and the display controlling unit may display the generated block top image or the sub-block top image along the vertical direction on the right side or the left side of the selected object.

According to another embodiment of the present invention, there is provided an information processing method including the steps of detecting a position of an operator positioned on a display panel where a plurality of objects of the moving picture contents are displayed along a predetermined direction, detecting the object selected by the operator, dividing content data corresponding to the detected object into a plurality of blocks and generating the object corresponding to the block top image which is an image positioned at the top of each block, and arranging a plurality of block top images in a time order and hierarchically displaying them with the selected object as a reference.

According to another embodiment of the present invention, there is provided a program for causing a computer having a display panel where a plurality of objects of moving picture contents are displayed along a predetermined direction to realize an input position detecting function of detecting a position of an operator positioned on the display panel, a selected object detecting function of detecting the object selected by the operator, a block dividing function of dividing content data corresponding to the object detected by the selected object detecting function into a plurality of blocks and generating an object corresponding to the block top image which is an image positioned at the top of each block, and a display controlling function of arranging a plurality of block top images in a time order and hierarchically displaying them with the selected object as a reference.

According to such a configuration, the computer program is stored in the storage unit of a computer and makes a computer function as the aforementioned information processing apparatus, by being read into the CPU of the computer and executed. Further, a computer readable recording medium, in which the computer program is recorded, can also be provided. For example, a magnetic disc, an optical disc, a magnetooptic disc, and a flush memory, or the like can be given as the recording medium. Moreover, the aforementioned computer program may also be distributed, for example, through a network, without using the recording medium.

According to embodiments of the present invention, the content of the moving picture contents can be grasped with further easy operation without performing reproduction of the moving picture contents.

### Brief Description of the Drawings

Embodiments of the invention will now be described with reference to the accompanying drawings, throughout which like parts are referred to by like references, and in which:
FIG. 1 is an explanatory view for explaining an example of an outer appearance of an information processing apparatus according to a first embodiment of the present invention;
FIG. 2 is an explanatory view for explaining an example of the outer appearance of the information processing apparatus according to the embodiment;
FIG. 3 is a block diagram for explaining a configuration of the information processing apparatus according to the embodiment;
FIG. 4 is an explanatory view for explaining an example of an information processing method according to the embodiment;
FIG. 5 is an explanatory view for explaining an example of an information processing method according to the embodiment;
FIG. 6 is an explanatory view for explaining an example of an information processing method according to the embodiment;
FIG. 7 is an explanatory view for explaining an example of an information processing method according to the embodiment;
FIG. 8 is a flowchart for explaining a flow of the information processing method according to the embodiment;
FIG. 9 is an explanatory view for explaining an example of the information processing method according to the embodiment;
FIG. 10 is a block diagram for explaining a hardware configuration of the information processing apparatus according to each embodiment of the present invention;
FIG. 11 is an explanatory view for describing an example of a display screen in a moving picture disclosure site; and
FIG. 12 is an explanatory view for describing an example of the display screen in a moving picture reproduction apparatus.

### Description of the Example Embodiments

Hereinafter, example embodiments of the present invention will be described in detail with reference to the appended drawings. Note that, in the specification and the appended drawings, structural elements that have substantially the same function and structure are denoted with the same reference numerals, and repeated explanation of these structural elements is omitted.
(1) Object
(2) First embodiment
   (2-1) Regarding an overall configuration of an information processing apparatus
   (2-2) Regarding a function configuration of the information processing apparatus
   (2-3) Regarding an information processing method
(3) Regarding a hardware configuration of the information processing apparatus according to embodiments of the present invention
(4) Summary

### <Object>

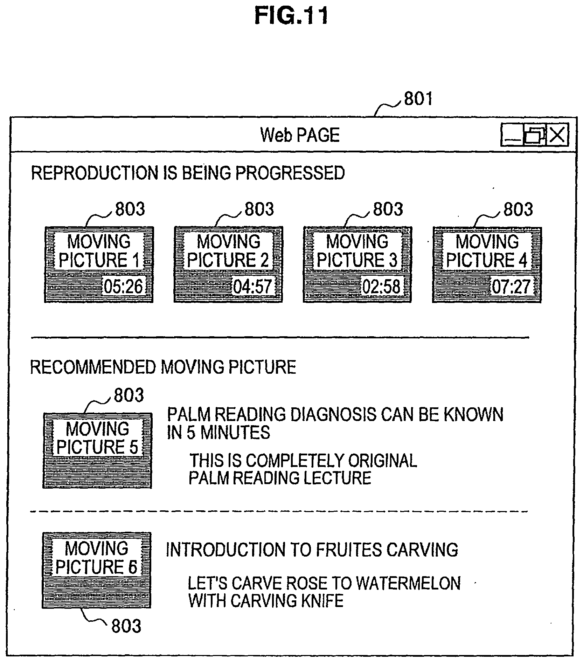

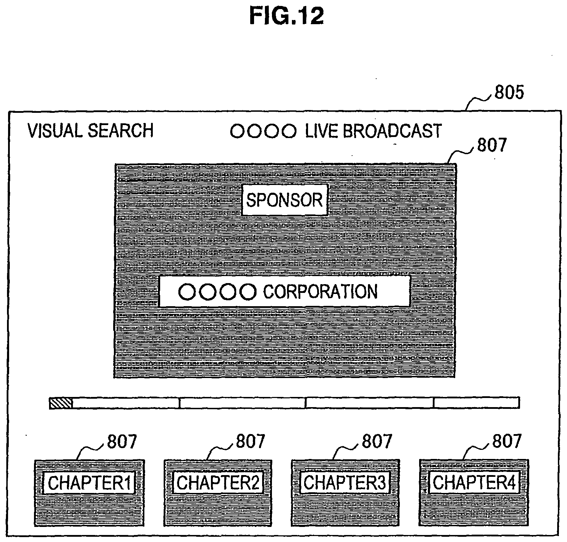

First, prior to explaining for the information processing apparatus and the information processing method according to embodiments of the present invention, what is aimed at by various embodiments of the present invention will be simply described with reference to FIG. 11 and FIG. 12. FIG. 11 is an explanatory view for describing an example of a display screen in a moving picture disclosure site, and FIG. 12 is an explanatory view for describing an example of the display screen in a moving picture reproduction apparatus.

In the moving picture disclosure site disclosed on the Internet, for example, as shown in FIG. 11, window 801 browsing the moving picture disclosure site, displays only one screen shot 803 corresponding to each moving picture content which is posted by a user. Here, the screen shot means an image cut-out in one scene of the moving picture contents and displayed as thumbnail. A viewer of the moving picture disclosure site selects the displayed screen shot 803, and can reproduce a moving picture content desired to be viewed. However, since the screen shot 803 is a cut-out image in a certain one scene of the moving picture content, confirmation of detailed content of the contents is sometimes difficult until the reproduction is started.

Also, in the moving picture reproduction apparatus such as a hard disc (HDD) recorder, it may be possible to previously record chapter information showing CM and a gap of scenes during recording of the moving picture contents, then arrange screen shots along a time line, and edit the screen shots. Thus, for example as shown in FIG. 12, a plurality of screen shots 807 generated based on the recorded chapter information can be displayed on the display screen 805. The user can reproduce the moving picture contents from a desired scene, while referring to a plurality of screen shots 807 generated based on the chapter information. In this method, the chapter information needs to be previously embedded in the moving picture contents. Therefore, the method as shown in FIG. 12 may not be applied to the moving picture contents not having the chapter information which is posted on the moving picture disclosure site as shown in FIG. 11.

In Japanese Patent Application Laid-Open No. 2007-267356, the number of the thumbnail images displayed on the display screen can be increased/decreased according to an operation by the user. Therefore, sometimes it becomes also easy to grasp the moving picture contents not having the chapter information.

However, when the user desires to know the moving picture contents in further detail, the user has to display the thumbnail image until it becomes possible to grasp the contents by selecting the thumbnail image multiple numbers of times, thus involving an issue that usability of the user is sometimes impaired.

Therefore, embodiments of the present invention seek to provide a method capable of grasping the content of the moving picture contents with further easy operation without performing reproduction of the moving picture contents, even in a case of the moving picture contents not having additional information effective in grasping the contents such as chapter information. As a result, the information processing apparatus and the information processing method according to embodiments of the present invention as will be described below, can be achieved.

### (First embodiment)

### <Regarding an overall configuration of the information processing apparatus>

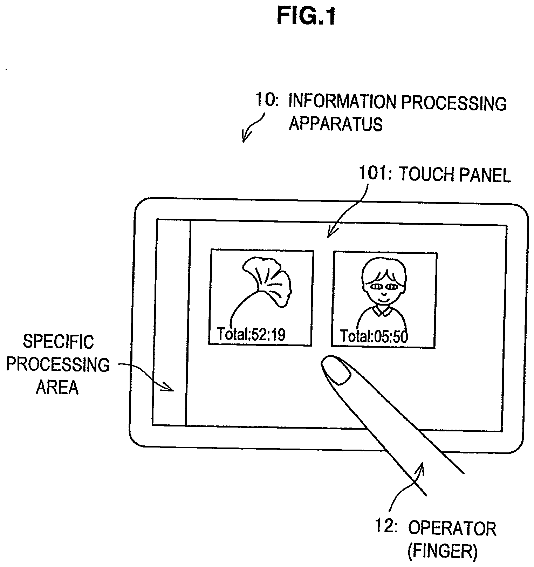

First, the overall configuration of the information processing apparatus according to a first embodiment of the present invention will be described with reference to FIG. 1. FIG. 1 is an explanatory view for describing an outer appearance of an information processing apparatus 10 according to this embodiment.

As shown in FIG. 1, the information processing apparatus 10 includes a display unit having a touch panel 101 (abbreviated as a touch panel 101 hereinafter). As shown in FIG. 1, the touch panel 101 displays an object, etc, regarding the moving picture contents. Each kind of information displayed on the touch panel 101 is subjected to predetermined processing such as scrolling corresponding to touch and movement of an operator 12. Further, a specific processing area may be provided in the touch panel 101. In this specific processing area, for example, an object such as an icon is displayed for executing predetermined processing, and by selecting this specific display area, predetermined processing is executed in association with the displayed object.

Regarding touch and movement of the operator 12, the information processing apparatus 10 does not execute only specific processing such as selecting the object and moving the display content. For example, when the operator 12 moves while drawing a predetermined locus in a state of being touched on the touch panel 101, the information processing apparatus 100 executes predetermined processing corresponding to the locus drawn by the operator 12. Namely, the information processing apparatus 100 has a gesture input function. For example, when a predetermined gesture is input, the application corresponding to this gesture is activated, or predetermined processing corresponding to this gesture is executed.

As the operator 12, for example, a finger, etc, of a user is used. Also, as the operator 12, for example a stylus or a touch pen, etc, is used. Further, when the touch panel 101 is an optical type, an arbitrary object can be the operator 12. For example, when the touch panel 101 is the optical type, a soft tool such as a brush difficult to be pressed against the touch panel 101 can be used as the operator 12. Further, when the touch panel 101 is an in-cell type optical touch panel, any object can be the operator 12, provided that a shade is photographed on the touch panel 101.

Here, the in-cell type optical touch panel will be simply described. There are several kinds in the optical touch panel. For example, there is a relatively generally known optical touch panel of a system in which an optical sensor is provided in an outer frame of a liquid crystal panel constituting a liquid crystal display, and a position and a moving direction of the operator 12 touched on the liquid crystal panel is detected by this optical sensor. Unlike this system, the in-cell type optical touch panel has an optical sensor array mounted on the liquid crystal panel, and has a mechanism of detecting the position and the moving direction of the operator 12 by this optical sensor array, in contact with or close to the liquid crystal panel.

More specifically, an optical sensor and a read circuit are formed on a glass substrate of the optical touch panel, and light incident thereon from outside is detected by the optical sensor, and intensity of the light is read by the read circuit, to thereby recognize the shade of the operator 12. Thus, in the in-cell type optical touch panel, the shape and a touch area of the operator 12 can be recognized based on the shade of the operator 12. Therefore, an operation by touch "surface" regarded as being difficult by other optical touch panel can be realized. By applying the in-cell type optical touch panel, merits such as improvement of recognition accuracy and improvement of display quality, and further improvement of design property in the liquid crystal display having the in-cell type optical touch panel mounted thereon can be obtained.

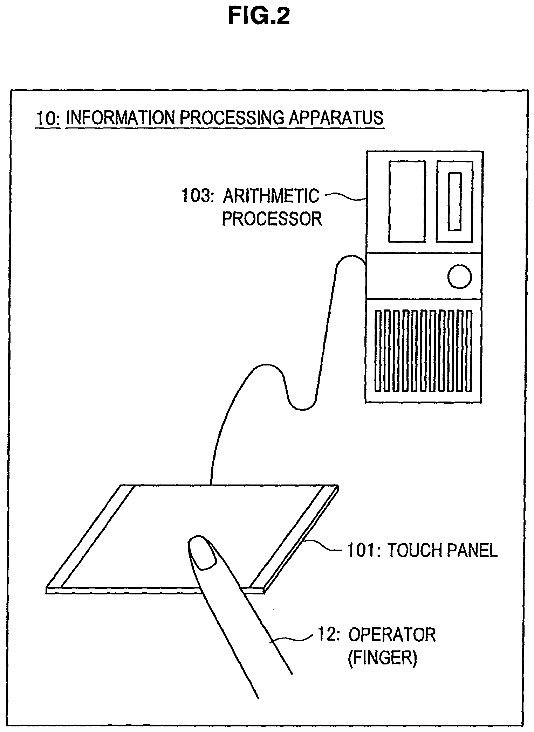

In addition, the configuration of the information processing apparatus 10 having touch panel 101 mounted thereon can be modified, for example, as shown in FIG. 2. In an example of FIG. 2, the touch panel 101 constituting the information processing apparatus 10 and an arithmetic operation processing apparatus 103 for processing positional information, etc, of the operator 12 detected by the touch panel 101 are constituted separately. In a case of this constitutional example, processing of data generated according to the processing such as selection of the object and movement of the display content is executed by the arithmetic operation processing apparatus 103. Thus, the information processing apparatus 10 can freely deform its configuration, according to an embodiment.

In addition, the function of the information processing apparatus 10 is realized, for example by a portable information terminal, a cell-phone, a portable game machine, a portable music player, broadcast equipment, a personal computer, a car navigation system, or an information home electronics, and so forth.

### <Regarding a function configuration of the information processing apparatus>

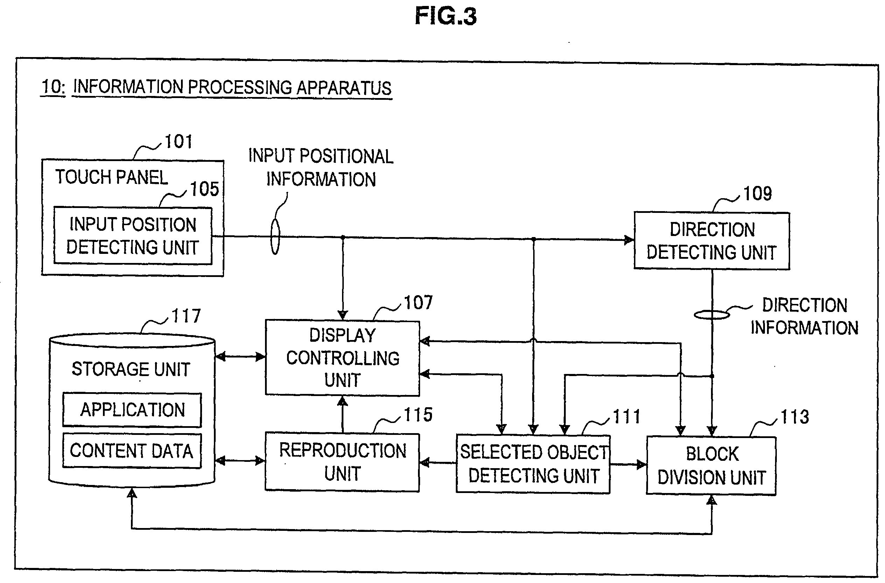

Subsequently, the function configuration of the information processing apparatus according to this embodiment will be described in detail with reference to FIG. 3. FIG. 3 is a block diagram for describing the function configuration of the information processing apparatus 10 according to this embodiment.

For example, as shown in FIG. 3, the information processing apparatus 10 according to this embodiment mainly includes a touch panel 101, a display controlling unit 107, a direction detecting unit 109, a selection object detecting unit 111, a block division unit 113, a reproduction unit 115, and a storage unit 117.

The touch panel 101 serves as an operation input unit provided in the information processing apparatus 10 according to this embodiment. The touch panel 101 may be the aforementioned optical touch panel, or may be the in-cell type optical touch panel. This touch panel 101 may be formed integrally with the display unit (not shown) such as a display device of the information processing apparatus 10, or may be formed separately. This touch panel 101 further includes an input position detecting unit 105.

The input position detecting unit 105 detects the position of the touch panel 101 touched by the operator 12. The input position detecting unit 105 may be constituted so as to detect a pressing force added to the touch panel 101 when touched by the operator 12. Also, even if not directly being touched by the operator 12, the input position detecting unit 105 may have the function of detecting an existence of the operator 12 closely approaching the touch panel 101 in a space on the touch panel 101 and recognizing it as a touch position. Namely, the touch position here may include the positional information regarding a motion of the operator 12 performed so as to draw air on a screen of the touch panel 101.

The input position detecting unit 105 transmits the information regarding the detected touch position (more specifically, coordinate of the touch position) to the display controlling unit 107, the direction detecting unit 109, and the selection object detecting unit 111, as input positional information. For example, when the detected touch position is one, the input position detecting unit 105 outputs one coordinate (X1, Y1) as the input positional information. Also, when the detected touch position is two, the input position detecting unit 105 outputs a plurality of coordinates (X1, Y1), (X2, Y2).

The display controlling unit 107 is constituted of, for example, CPU, ROM, and RAM, or the like. The display controlling unit 107 serves as a control means for controlling the content displayed on the touch panel 101. For example, the display controlling unit 107 reads object data such as a thumbnail image of arbitrary image data recorded in the storage unit 117 as will be described later, which is then displayed on the touch panel 101. At this time, the display controlling unit 107 indicates the display position of the object on the touch panel 101, so that the object data is displayed at this display position. Therefore, the information showing the display position, etc, of the object displayed on the touch panel 101 is held in the display controlling unit 107. The information showing the display position of the object is transmitted to the selected object detecting unit 111 and the block division unit 113 from the display controlling unit 107.

The input positional information is input into the display controlling unit 107 from the input position detecting unit 105. For example, when the operator 12 touched on the touch panel 101 is moved, the input positional information is input into the display controlling unit 107 from the input position detecting unit 105 in real time. The display controlling unit 107 acquires the object such as thumbnail of the moving picture content possessed by the information processing apparatus 10, from the storage unit 117 as will be described later, which is then displayed on the display screen. Further, when the information regarding the selected object is input from the selected object detecting unit 111 as will be described later, the display controlling unit 107 can change the display so as to emphasize the selected object. For example, the display controlling unit 107 can perform control, so that brightness (luminance) of the selected object is set to be brighter, and the brightness of a non-selected object is set to be dark. Moreover, when images generated after dividing the moving picture content corresponding to the selected object, are input from the block division unit 113 as will be described later, the display controlling unit 107 arranges these images in a time order and displays them in the display screen. Also, when the images constituting the selected moving picture contents are input from a reproduction unit 115 as will be described later, the display controlling unit 107 displays the input reproduced images on the display screen.

The direction detecting unit 109 is constituted of, for example, CPU (Central Processing Unit), ROM (Read Only Memory), RAM (Random Access Memory), or the like. The direction detecting unit 109 detects the moving direction of the operator 12 by using a coordinate value which is the input positional information transmitted from the input position detecting unit 105.

More specifically, the direction detecting unit 109 detects the moving direction of the operator 12 based on the variation of the input positional information transmitted every time interval (for example, every several milliseconds to several hundred milliseconds). A movement determination area utilized for determining presence/absence of the movement of the operator 12 is set in the direction detecting unit 109. This movement determination area can be set to be an arbitrary largeness, according to a performance such as a resolution capable of distinguishing the adjacent two touch positions from each other on the touch panel 101, and for example, can be set to have a radius of about 10 pixels. When the transmitted positional information is changed so as to exceed this movement determination area, the direction detecting unit 109 determines that the operator 12 moves. Further, when the transmitted input positional information is changed so as not to exceed a range of the movement determination area, the direction detecting unit 109 can determine that so-called tapping operation is performed by the operator 12. Determination whether or not the operator 12 is moved, is performed regarding all pieces of input positional information transmitted at the same timing. Namely, when two coordinate values are transmitted as the input positional information at the same timing, the direction detecting unit 109 performs the aforementioned determination regarding the time variation of each of the two coordinate values.

Also, when the transmitted input positional information is changed so as to exceed the range of the movement determination area, the direction detecting unit 109 detects the direction of vector formed by the locus drawn by the transmitted input positional information with elapse of time, as the moving direction. Also, the magnitude of the aforementioned vector is a moving amount of the operator 12.

For example, when a case such that coordinate A(X1(t1), Y1(t1)) is transmitted at time t1 from the input position detecting unit 105, and the position at time t2 corresponding to the input positional information is defined by coordinate A'(X3(t2), Y3(t2)), is considered. At this time, the direction detecting unit 109 detects the direction shown by vector V1 defined by starting point coordinate A and ending point coordinate A', as the moving direction of the operator 12 touched on the coordinate A. Also, the direction detecting unit 109 sets the magnitude of the vector V1 as the moving amount of the operator 12.

The direction detecting unit 109 transmits the direction information regarding the detected moving direction to the block division unit as will be described later.

The selected object detecting unit 111 is constituted of, for example, CPU, ROM, and RAM, or the like. The input positional information is input into the selected object detecting unit 111 from the input position detecting unit 105. Further, the information showing the display position of the object, etc, is also input into the selected object detecting unit 111 from the display controlling unit 107. Therefore, the selected object detecting unit 111 compares the input positional information input from the input position detecting unit 105 and the information showing the display position input from the display controlling unit 107. Then, the selected object detecting unit 111 detects the object selected by the operator 12. By this processing, the selected object detecting unit 111 transmits the information regarding the selected object of the moving picture content and the selected object of a block top image, to the display controlling unit 107, the block division unit 113, and the reproduction unit 115. The block top image will be described hereinafter again.

The block division unit 113 is constituted of, for example, CPU, ROM, and RAM, or the like. The block division unit 113 divides the content data of the moving picture content corresponding to the selected object of the moving picture content into a plurality of blocks based on a predetermined reference. Also, the block division unit 113 generates the object (such as thumbnail) corresponding to the block top image which is the image positioned at the top of each of the divided blocks. Further, the block division unit 113 further divides the content data corresponding to the block including the selected block top image, into a plurality of sub-blocks, and generates the object corresponding to a sub-block top image which is the image positioned at the top of each sub-block.

Block division processing by the block division unit 113 is started based on the direction information transmitted from the direction detecting unit 109. More specifically, when the operator, which selects the object, moves to an area where no object exists in the display screen (touch panel 101) where a plurality of objects are displayed, generation of the object is started corresponding to the block top image or the sub-block top image.

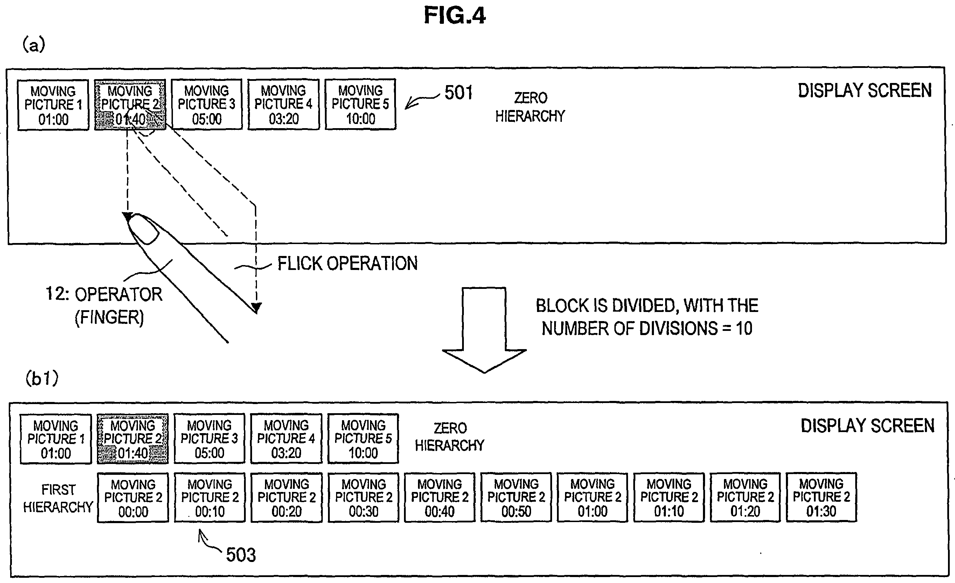

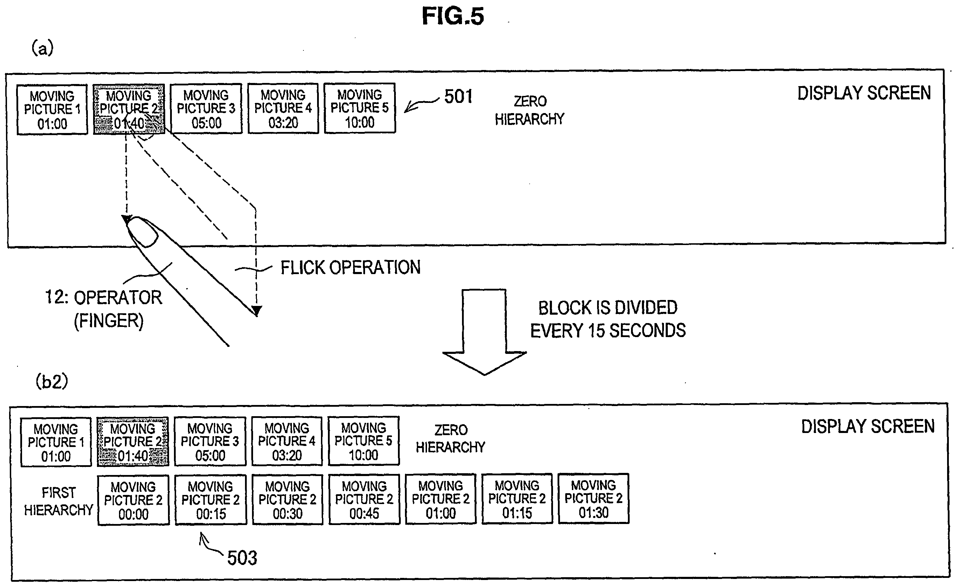

As described above, the block division unit 113 divides the content data into a plurality of blocks in compliance with a predetermined reference. As a reference in dividing the block, for example, it may be possible to exemplify previously set number of blocks and previously set division time. Block division processing performed by the block division unit 113 will be described in detail hereinafter with reference to FIG. 4 and FIG. 5.

As a predetermined reference in the block division processing, Fig. 4 is an explanatory view for explaining the block division processing when the number of divisions of the block is previously set. In FIG. 4, for example, a case such that the number of divisions of the block is set to be 10, is taken as an example to explain. Note that the number of divisions of the block is not limited to the example shown in FIG. 4, and can be set to be an arbitrary value, according to a size of the display screen, the size of the object displayed on the display screen, and processing ability of the information processing apparatus.

Also, the following case is considered. Namely, a thumbnail image 501 which is an object corresponding to five kinds of moving picture contents of moving picture 1 to moving picture 5, is displayed on the display screen, as shown in FIG. 4 (a). These objects of the moving picture contents that can be reproduced by the information processing apparatus 10 are displayed in such a manner as being arranged along the lateral direction of the display screen (0 hierarchy). Here, the time displayed on each thumbnail image 501 is the time required for entirely reproducing each moving picture content (called total reproducing time hereinafter).

As shown in FIG. 4 (b1), a moving picture 2 for 1 minute and 40 seconds as its total reproducing time is selected by the operator 12, and when the operator 12 is moved downward by flick operation where no object exists, the block division processing is started. Here, the flick operation means an operation of slightly flicking off the object by the operator 12. The moving picture 2 selected by flick operation is divided into 10 blocks by the block division unit 113. The content data corresponding to the moving picture 2 has 1 minute and 40 seconds as total reproducing time. Therefore, when the moving image 2 is divided into 10 blocks, each block has a size of every 10 seconds. The block division unit 113 extracts/generates the image positioned at the top of each block from the content data according to the reproducing time of the block top image, and sets it as a block top image 503. For example, in an example shown in FIG. 4, ten block top images 503 in total are generated from the block top image 503 at time point of "00:00" to the block top image 503 at time point of "01:30", and are arranged in a time order and displayed on the display screen (first hierarchy). Display on the display screen is executed in a hierarchy, with the thumbnail image 501 corresponding to the moving image 2 as a reference, so as to know that this is an image obtained by dividing the moving picture 2. Thus, the block top images 503 are hierarchically displayed in a row in a lower direction, with the thumbnail image 501 which is a parent image, as a reference. Here, the parent image shows an object image before being divided, and the block image such as the block top image divided based on the parent image is called a child image.

FIG. 5 is an explanatory view for describing the block division processing when the division time is previously set, as a predetermined reference in the block division processing. In FIG. 5, a case such that 15 seconds is set as the division time, is taken as an example to explain. Note that the division time is not limited to the example shown in FIG. 5, and can be set to be an arbitrary value, according to the size of the display screen, the size of the object displayed on the display screen, and the processing ability of the information processing apparatus.

As shown in FIG. 5 (a), a case such that thumbnail images 501 which are objects corresponding to five kinds of moving picture contents from moving picture 1 to moving picture 5 are displayed on the display screen, is considered. These objects of the moving picture contents that can be reproduced by the information processing apparatus 10 are displayed in such a manner as being arranged along the lateral direction of the display screen (0 hierarchy). Here, the time displayed on each thumbnail image 501 is the time required for entirely reproducing each moving picture content (called total reproducing time hereinafter).

As shown in FIG. 5 (b2), the moving picture 2 for 1 minute and 40 seconds as the total reproducing time, is selected and when the operator 12 is moved downward by flick operation, where no object exists, the block division processing is started. The moving picture 2 selected by flick operation is divided by the block division unit 113 into a plurality of blocks from the top of the content data every 15 seconds. The content data corresponding to the moving picture 2 has 1 minute and 40 seconds as the total reproducing time, and therefore when it is divided into blocks of every 15 seconds, seven blocks are generated in total. The block division unit 113 extracts/generates the image positioned at the top of each block from the content data according to the reproducing time of the top of the block, and sets it as the block top image 503. For example, in the example shown in FIG. 5, seven block top images 503 in total are generated from the block top image 503 at time point "00:00" to the block top image 503 at time point "01:30", and are arranged in a time order and displayed on the display screen (first hierarchy). Display on the display screen is executed in hierarchy, with the thumbnail image 501 corresponding to the moving image 2 as a reference, so as to know that this is an image obtained by dividing the moving image 2. Thus, the block top images 503 are hierarchically displayed in a row in the lower direction with the thumbnail image 501 which is the parent image as a reference.

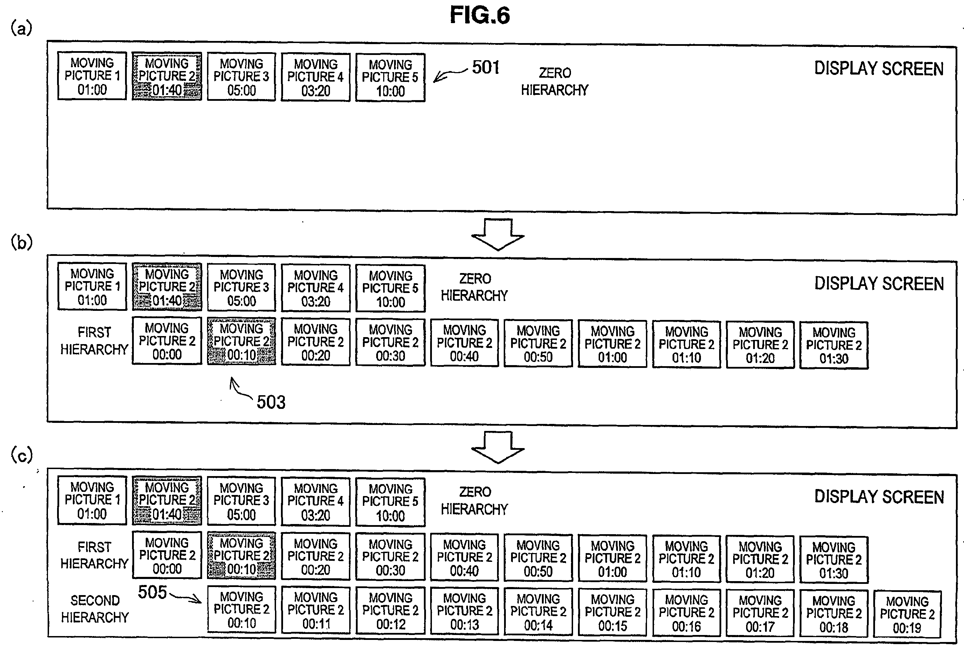

In addition, when the block top image 503 is further selected, the block division unit 113 further finely divides the content data corresponding to the block, to which the selected block top images 503 belong, into a plurality of blocks in compliance with a predetermined reference. A case such as executing block division processing based on predetermined number of divisions of block (the number of divisions = 10) will be described in detail with reference to FIG. 6.

As shown in FIG. 6 (a), a case such as displaying the thumbnail images 501 which are the objects corresponding to the moving picture contents of five kinds from moving picture 1 to moving picture 5, on the display screen, will be considered. In this case, when the moving picture 2 is selected by flick operation by the operator 12, the block top images 503 are generated based on the aforementioned procedure, and as shown in FIG. 6 (b), these block top images 503 are displayed on the display screen as the first hierarchy. Here, a case such as selecting the block top images 503 corresponding to "00:10" of the moving picture 2 will be considered.

The selected block is the block having the content data of 10 seconds. When this block is selected, as shown in FIG. 6 (c), the block division unit 113 generates ten sub-blocks having content data of 1 second. Subsequently, the block division unit 113 generates the sub-block top images which are the images positioned at the top of ten sub-blocks. The block division unit 113 requests the display controlling unit 107 to display these ten sub-block top images, and as shown in FIG. 6 (c), ten sub-block top images are displayed on the display screen as a second hierarchy. In an example shown in FIG. 6 (c), as the second hierarchy, screen shots for every 1 second are displayed as the sub-block top images 505.

Thus, every time the object such as thumbnail is selected, the block division unit 113 divides the content data including the selected object, into further fine blocks in compliance with a predetermined reference. Thus, the moving picture contents can be finely divided repeatedly by using the display of the hierarchical objects, and the contents can be grasped without reproducing the moving picture contents even if the contents are first-browsed. Further, the image positioned at the top of the block generated as a result of division, is generated from the content data every time the division processing is performed, and therefore a plurality of thumbnail images can be generated, even in a case of the moving picture contents not having additional information such as chapter information. As a result, zapping and seeking can be performed even in a case of the moving picture contents not having the additional information such as chapter information.

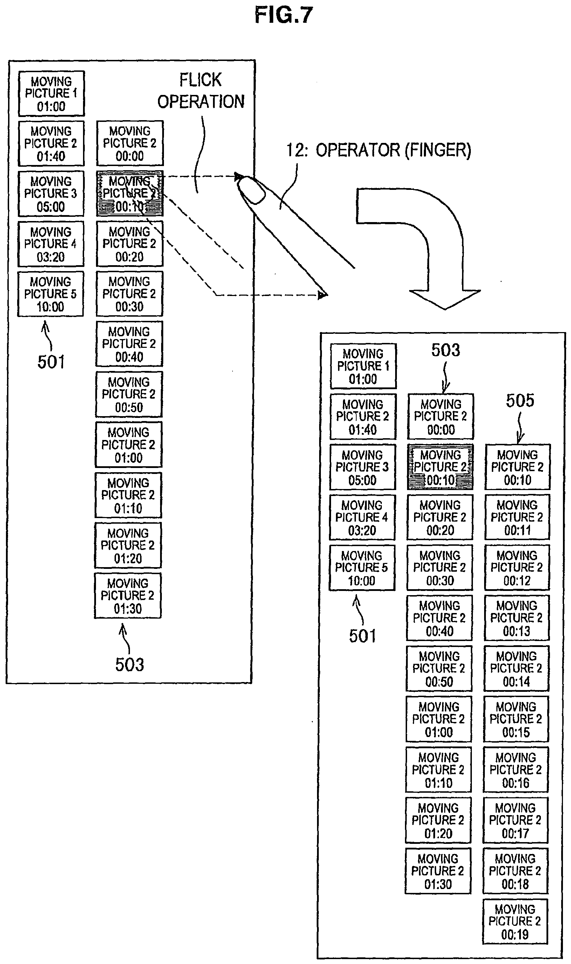

Note that in FIG. 4 to FIG. 6, explanation has been given for a case in which the objects are displayed from the left side to the right side, and the block division processing is performed according to downward flick operation. However, the present invention is not limited to the aforementioned example. For example, as shown in FIG. 7, the objects are displayed from the upper side to the lower side, and the block division processing may be performed according to rightward flick operation. In the example shown in FIG. 7, a vertical row positioned on the most left side is 0 hierarchy, and a vertical row positioned in adjacent to the first hierarchy on the right side is the first hierarchy, and a vertical row positioned on the most right side is the second hierarchy.

The reproduction unit 115 is constituted of, for example, CPU, ROM, and RAM, or the like. When the object such as the thumbnail image 501 of the moving picture contents, the block top image 503, and the sub-block top image 505 are selected by the operator 12, the reproduction unit 115 reproduces the corresponding moving picture contents and requests the display controlling unit 107 to display these moving picture contents. More specifically, when the object is selected by tapping operation and double click operation by the operator 12, the selected object detecting unit 111 detects accordingly, and a detection result is transmitted to the reproduction unit 115. The reproduction unit 115 acquires the content data of the moving picture contents corresponding to the selected object from the storage unit 117, and applies reproduction processing thereto. Further, when the moving picture contents exist not in the information processing apparatus 10 but on each kind of server that exists on the network of the Internet, etc, the reproduction unit 115 acquires the corresponding content data from this server, and can apply reproduction processing thereto.

The object data displayed on the touch panel 101 is stored in the storage unit 117. The object data here includes arbitrary parts constituting a graphical user interface (called GUI hereinafter) such as icon, buttons, thumbnail, etc,. Further, the storage unit 117 may also store the object data of the moving picture contents that can be reproduced by the information processing apparatus 10. Moreover, the storage unit 117 stores attribute information in association with the individual object data. The attribute information includes, for example, preparation date/time, updating date/time, preparing person's name, updating person's name of object data or substance data, kind of the substance data, size of the substance data, level of importance, and priority.

Also, the storage unit 117 stores the substance data corresponding to the object data in association with each other. The substance data here means the data corresponding to a predetermined processing executed when the object displayed on the touch panel 101 is operated. For example, the object data corresponding to the moving picture contents is associated with the content data of its moving picture content as the substance data. Also, the moving picture reproducing application for reproducing the moving contents is stored in the storage unit 117, in association with the object data, content data, or attribute information.

The object data stored in the storage unit 117 is read by the display controlling unit 107 and displayed on the touch panel 101. Also, the substance data stored in the storage unit 117 is read by the reproduction unit 115 with reproduction processing being applied thereto, and is displayed on the touch panel 101 by the display controlling unit 107.

Further, other than the aforementioned data, the storage unit 117 can appropriately store various parameters and the processing in progress required to be saved when some processing is performed by the information processing apparatus 10, or each kind of database, and so forth. The input position detecting unit 105, display controlling unit 107, direction detecting unit 109, selected object detecting unit 111, block division unit 113, and reproduction unit 115, or the like, can freely read and write from/into this storage unit 117.

As described above, an example of the function of the information processing apparatus 10 according to this embodiment has been shown. The aforementioned each constituent element may be constituted by using a member and a circuit for general purpose of use, or may be constituted by hardware specialized in the function of each constituent element. Also, the function of each constituent element may be entirely performed by CPU, etc. Accordingly, the configuration to be utilized can be modified appropriately according to an occasional technical level at the time of executing this embodiment.

Moreover, it is possible to manufacture a computer program for realizing each function of the information processing apparatus 10 according to embodiments of the present invention as described above, so as to be mounted on a personal computer, etc.

### <Regarding an information processing method>

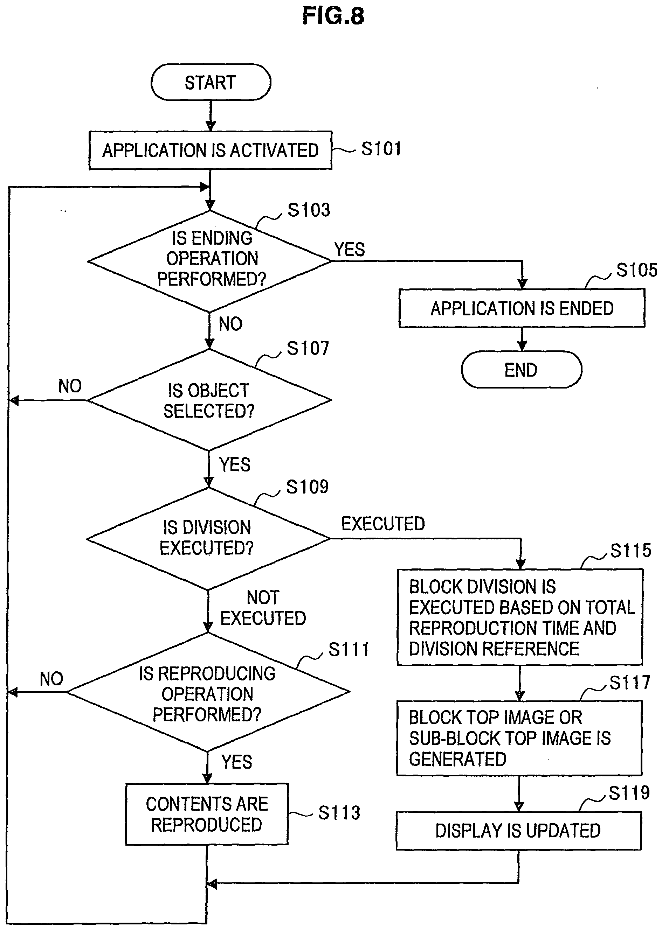

Subsequently, an information processing method according to this embodiment will be described in detail with reference to FIG. 8. FIG. 8 is a flowchart for describing the flow of the information processing method according to this embodiment.

First, the user of the information processing apparatus 10 operates the touch panel 101 by using the operator 12 such as a finger and stylus, and selects the object such as an icon in association with the application desired to be executed. Thus, the information processing apparatus 10 activates the application in association with the selected object (step S101).

Subsequently, the information processing apparatus 10 waits for the input by the user, and determines whether or not the ending operation of the application is input (step S103). When the ending operation of the application is input by the user, the information processing apparatus 10 ends the running application (step S105).

Further, when the ending operation of the application is not input, the information processing apparatus 10 waits for the input by the user and determines whether or not the object is selected (step S107).

When the information processing apparatus 10 is not notified of the matter that the object is selected by the selected object detecting unit 111, the processing is returned to step S103 and the information processing apparatus 10 determines whether or not the ending operation is input. Also, the block division unit 113 notified of the matter that the object is not selected, determines presence/absence of the movement of the operator 12 corresponding to a predetermined operation (such as flick operation) from the detection detecting unit 109, and determines whether or not the block division is executed (step S109).

When the predetermined operation such as flick operation is not performed, the selected object detecting unit 111 determines whether or not the reproducing operation of the moving picture contents, such as tapping operation, is performed (step S111). When the reproducing operation is not performed, the processing is returned to step S103, and the information processing apparatus 10 determines whether or not the ending operation is input. Also, when the reproducing operation is performed, the selected object detecting unit 111 transmits accordingly to the reproduction unit 115. The reproduction unit 115 acquires from the storage unit 117 the content data of the moving picture content, to which the reproduction operation is applied, and applies reproduction processing thereto, and requests the display controlling unit 107 to display the moving picture contents (step S113). When the reproduction processing of contents is started, the processing is returned to step S103, and the information processing apparatus 10 determines whether or not the ending operation is input.

Meanwhile, when a predetermined operation such as flick operation is performed, the block division unit 113 executes block division processing. More specifically, the block division unit 113 divides the content data into predetermined blocks based on the total reproduction time of the selected moving picture content and a predetermined division reference such as the number of divisions of the block or division time, and so forth (step S 115). Subsequently, the block division unit 113 generates the image positioned at the top of each block, and sets it as the block top image or the sub-block top image (step S 117). Subsequently, the block division unit 113 transmits the generated block top image or sub-block top image to the display controlling unit 107, and the display controlling unit 107 updates the display contents (step S 119). When update of the display contents is ended, the processing is returned to step S103, and the information processing apparatus 10 determines whether or not the ending operation is input.

By performing the processing in this procedure, the user can grasp the content of the moving picture contents with further easy operation without performing reproduction of the moving picture contents.

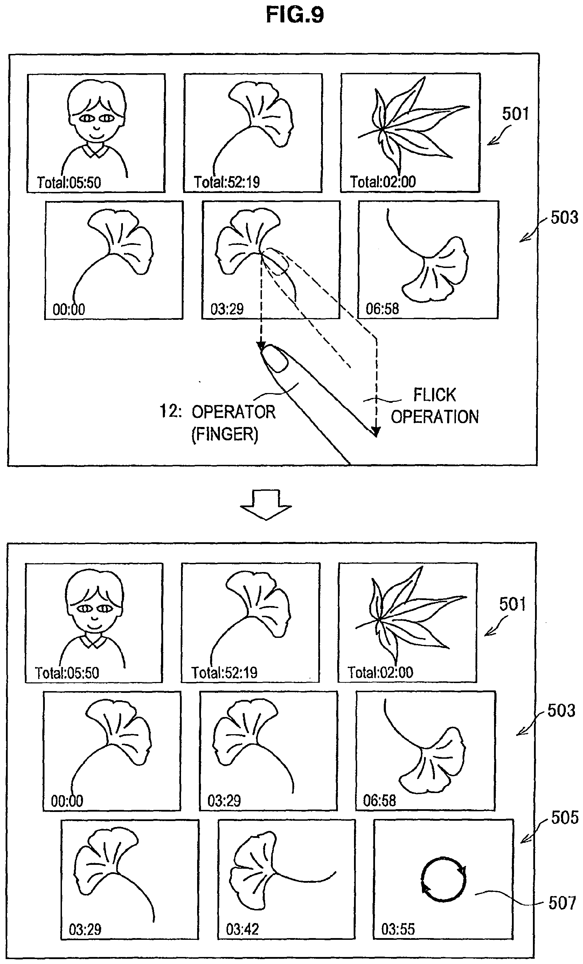

Subsequently, a specific example using the information processing method according to this embodiment will be described with reference to FIG. 9. FIG. 9 shows an example of applying division processing to a certain moving picture.

As shown in FIG. 9, the thumbnail images 501 corresponding to various screen shots of moving pictures are displayed in the first stage (namely 0 hierarchy) of the display screen in such a manner as being arranged. Out of these thumbnail images 501, in order to divide the moving picture expressed by the second screen shot counted from the left side, the user operates the operator 12, and applies flick operation downward to the screen shot. When the flick operation is performed, the corresponding screen shot slides downward, and thereafter the screen shots formed into blocks are spread in the right direction (first hierarchy). For example, when the number of divisions is assumed to be set to 15, as shown in FIG. 9, the length of each scene of the first hierarchy corresponds to 209 seconds. Therefore, the screen shots (block top images 503) of a scene divided for every 209 seconds are arranged in the second stage which is the first hierarchy in such a manner as 00:00, 03:29, 6:58.... The block division unit 113 sequentially generates the screen shots of the corresponding time from the content data corresponding to the moving picture content, after calculating the time.

In order to further perform block division in this state, the user operates the operator 12 and selects one screen shot, and performs flicking again downward. In order to divide the length 209 seconds of one scene of the second stage which is the first hierarchy, by the number 15 of divisions, the screen shots (sub-block top images 505) divided for every 13 seconds are arranged in the third stage which is the second hierarchy.

Note that as shown in FIG. 9, mark 507 during data reading may be displayed in the screen shot during generation. Also, when a certain screen shot is selected, the reproduction unit 115 may reproduce the contents in a size of the screen shot from the time of the selected screen shot. For example, in the lower stage of FIG. 9, a case such as selecting the screen shot of 03:29 positioned in the center is considered. In this case, the block division unit 113 may generate the sub-block top images 505 corresponding to the second hierarchy and reproduce the contents at the place of the screen shot of 03:29 positioned at the first hierarchy, in a size of the screen shot from 03:29.

In addition, in the information processing method according to this embodiment, it is also possible to further repeat the block division as necessary, or divide other scene of the second stage which is the first hierarchy or other moving picture of the first stage which is 0 hierarchy.

### <Regarding hardware configuration>

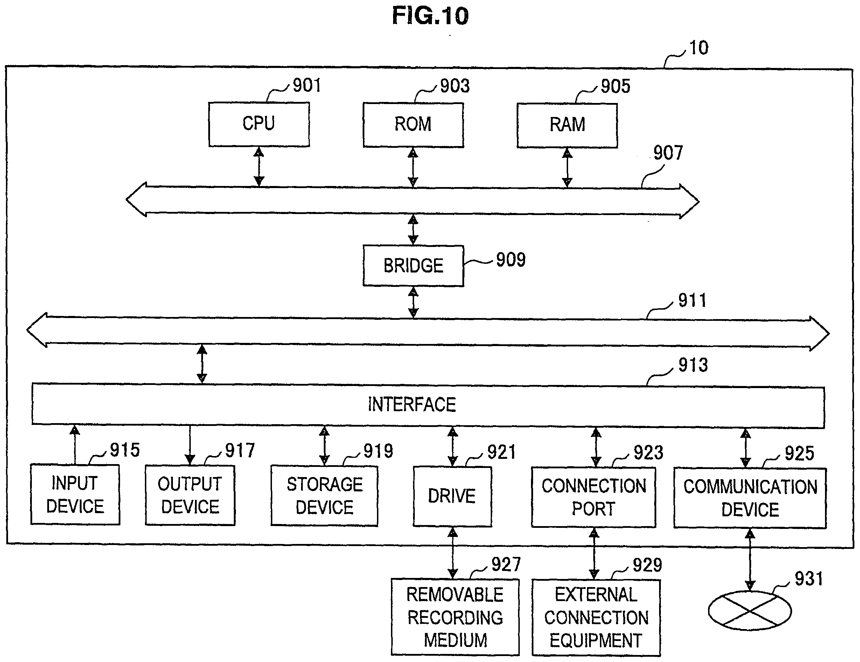

Next, a hardware configuration of the information processing apparatus 10 according to embodiments of the present invention will be described in detail with reference to FIG. 10. FIG. 10 is a block diagram for describing the hardware configuration of the information processing apparatus 10 according to embodiments of the present invention.

The information processing apparatus 10 mainly includes CPU 901, ROM 903, and RAM 905. In addition, the information processing apparatus 10 further includes a host bus 907, a bridge 909, an external bus 911, an interface 913, an input device 915, an output device 917, a storage device 919, a drive 921, a connection port 923, and a communication device 925.

The CPU 901 functions as an arithmetic operation device and a control device, and controls an overall operation or a part of the operation of the information processing apparatus 10, in accordance with each kind of program recorded in the ROM 903, the RAM 905, the storage device 919, or a removable recording medium 927. The ROM 903 stores a program or an arithmetic operation parameter, etc, used by the CPU 901. The RAM 905 temporarily stores the program used in executing the CPU 901 and parameters, etc., that vary appropriately in executing the CPU 901. They are connected to each other by the host bus 907 which is constituted of an internal bus such as a CPU bus.

The host bus 907 is connected to the external bus 911 such as PCI (Peripheral Component Interconnect/Interface) bus, through the bridge 909.

The input device 915 is an operation means for operating, for example, a mouse, a keyboard, a touch panel, a button, a switch, and a lever, by the user. Further, the input device 915 may be, for example, a remote control means (so-called remote controlling unit) utilizing, for example, infrared rays or other radio waves, and also may be external connecting equipment 929 such as a cell-phone and a PDA responding to the operation of the information processing apparatus 10. Further, the input device 915 is constituted of, for example, an input control circuit, etc, for generating an input signal based on the information input by the user by using the aforementioned operation means, and outputting it to the CPU 901. By operating the input device 915, the user of the information processing apparatus 10 can input each kind of data into the information processing apparatus 10 and can give an instruction of processing operation to the information processing apparatus 10.

The output device 917 is constituted of a device capable of visually and aurally notifying the user of the acquired information. As such a device, display devices such as a CRT display device, a liquid crystal display device, a plasma display device, an EL display device and a lamp, a voice output device such as a speaker and a headphone, a printer device, a cell-phone, and a facsimile, can be given. The output device 917, for example, outputs a result obtained by each kind of processing performed by the information processing apparatus 10. Specifically, the display device displays the result obtained by each kind of processing performed by the information processing apparatus 10, by text or image. Meanwhile, the voice output device converts an audio signal such as reproduced voice data and audio data into an analog signal and outputs this converted signal.

The storage device 919 is a device for storing data constituted as an example of the storage unit of the information processing apparatus 10. The storage device 919 is constituted of, for example, a magnetic storage device such as an HDD (Hard Disk Drive), a semiconductor storage device, an optical storage device, or a magneto-optical storage device. This storage device 919 stores the program and each kind of data executed by the CPU 901 and audio signal data and image signal data acquired from outside.

The drive 921 is a reader/writer for recording medium, and is incorporated or externally mounted in the information processing apparatus 10. The drive 921 reads the information recorded in mounted magnetic disc, optical disc, magneto-optical disc, or removable recording medium 927 such as a semiconductor memory, and outputs it to the RAM 905. Also, the drive 921 can write the recorded information into the mounted magnetic disc, the optical disc, the magneto-optical disc, or the removable recording medium 927 such as a semiconductor memory. The removable recording medium 927 is, for example, DVD media, HD-DVD media, and Blu-ray media, or the like. Also, the removable recording medium 927 may be a Compact Flash (CF) (registered trademark), a memory stick, or a SD memory card (Secure Digital memory card), or the like. Further, the removable recording medium 927 may also be, for example, a non-contact type IC-chip built-in IC card (Integrated Circuit card) or electronic equipment, or the like.

The connection port 923 is a port for directly connecting equipment to the information processing apparatus 10. As an example of the connection port 923, USB (Universal Serial Bus) port and IEEE1394 port such as i.Link, and SCSI (Small Computer System, Interface) port, etc, can be given. As another example of the connection port 923, RS-232C port, optical audio terminal, and HDMI (High-Definition Multimedia Interface) port, or the like can be given. By connecting the external connection equipment 929 to this connection port 923, the information processing apparatus 10 directly acquires the audio signal data and the image signal data from the external connection equipment 929, or provides the audio signal data and the image signal data to the external connection equipment 929.

The communication device 925 is, for example, a communication interface constituted of a communication device, etc, for connecting to a communication network 931. The communication device 925 is, for example, a communication card for a wired or wireless LAN (Local Area Network), Bluetooth, or WUSB (Wireless USB). Also, the communication device 925 may be a router for optical communication, a router for ADSL (Asymmetric Digital Subscriber Line), or a modem for each kind of communication. This communication device 925 can transmit/receive a signal, etc, in conformity with a predetermined protocol such as TCP/IP, for example between internet and other communication equipment. Also, the communication network 931 connected to the communication device 925 is constituted of a wiredly or wirelessly connected network, etc., and may be, for example, the internet, domestic LAN, infrared communication, radio wave communication, or satellite communication, or the like.

As described above, an example of a hardware configuration capable of realizing the function of the information processing apparatus 10 according to embodiments of the present invention is shown. The aforementioned each constituent element may be constituted by using a member for general purpose of use, or may be constituted by hardware specialized in the function of each constituent element. Accordingly, the utilized hardware configuration may be changed appropriately according to an occasional technical level at the time of executing this embodiment.

### <Summary>

As described above, according to the information processing apparatus and the information processing method according to the embodiments of the present invention, even in a case of a long moving picture having a length of about one hour, it can be formed into a row of the screen shots of about 10 seconds by repeating the block division about twice. Thus, when the length of the scene is shorter to a certain degree, the contents can be approximately grasped only by viewing the screen shots without reproducing the moving picture. When grasping of the contents is still difficult, or when further details are desired to be viewed, the block can be further finely divided.

In addition, in the aforementioned example, explanation has been given, for the purpose of performing zapping, to grasp the content of the moving picture contents. However, even in a case of performing seeking to retrieve an arbitrary scene of the moving picture contents, this technique can be used.

Further, in the moving picture previously having the chapter information, such as a movie and a TV program having CM information, it is possible to partition the first hierarchy by the chapter information, and partition the second hierarchy and thereafter by the number of divisions of the block and the division time, and is also possible to be used together with the chapter information.

In recent years, there are many opportunities of browsing the moving picture contents posted by a user through a Web Site such as a moving picture disclosed Web Site. However, these moving picture contents have no chapter information. However, in this technique, zapping and seeking can be performed by repeating block division by the number of block divisions and the division time, and therefore this technique is further useful for the contents not having such chapter information.

The present application contains subject matter related to that disclosed in Japanese Priority Patent Application JP 2008-276228 filed in the Japan Patent Office on October/28/2008.

For example, in the aforementioned embodiments, the information processing apparatus having only one display screen is taken as an example to explain. However, the present invention can be applied to, for example, foldable portable equipment having two or more display screens.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing apparatus, comprising:
a display panel (101) configured to display a plurality of objects of moving picture contents along a predetermined direction in a first horizontal or vertical row;
an input position detecting unit (105) configured to detect a position of an operator positioned on the display panel;
a selected object detecting unit (111) configured to detect an object selected by the operator;
a block division unit (113) configured to divide content data corresponding to the object detected by the selected object detecting unit into a plurality of blocks and to generate an object corresponding to a block top image which is an image positioned at the top of each block; and
a display controlling unit (107) configured to arrange a plurality of block top images in a time order and hierarchically display them in the time order along the predetermined direction in a second horizontal or vertical row adjacent to the first horizontal or vertical row with the selected object as a reference,
wherein the block division unit (113) is configured to divide the content data corresponding to the block including the selected block top image into further plurality of sub-blocks and generates an object corresponding to the sub-block top image which is an image positioned at the top of each sub-block and is configured to start generation of the object corresponding to the sub-block top image, when the operator, which selects the object, moves to an area where no object exists in the display panel where a plurality of objects are displayed, and the display controlling unit is configured to arrange a plurality of sub-block top images in a time order and hierarchically display them with the selected block top image as a reference.

2. The information processing apparatus according to claim 1, wherein the block division unit is configured to uniformly divide the content data based on the previously set number of blocks.

3. The information processing apparatus according to claim 1, wherein the block division unit is configured to divide the content data every previously set division time from the top of the content data.

4. The information processing apparatus according to claim 1, wherein the display panel is configured to display a plurality of objects along a lateral direction in the display panel,
the block division unit is configured to start generation of the object corresponding to the block top image or the sub-block top image, when the moving direction of the operator, which selects the object, is a vertical direction, and
the display controlling unit is configured to display the generated block top image or the sub-block top image in a lower layer of the object along the lateral direction.

5. The information processing apparatus according to claim 1, wherein the display panel is configured to display a plurality of objects along a vertical direction in the display panel,
the block division unit is configured to start generation of the object corresponding to the block top image or the sub-block top image, when the moving direction of the operator, which selects the object, is a lateral direction, and
the display controlling unit is configured to display the generated block top image or the sub-block top image along the vertical direction on the right side or the left side of the selected object.

6. An information processing method, comprising the steps of:
detecting a position of an operator positioned on a display panel where a plurality of objects of the moving picture contents are displayed along a predetermined direction in a first horizontal or vertical row;
detecting the object selected by the operator;
dividing content data corresponding to the detected object into a plurality of blocks and generating the object corresponding to the block top image which is an image positioned at the top of each block; and
arranging a plurality of block top images in a time order and hierarchically displaying them in the time order along the predetermined direction in a second horizontal or vertical row adjacent to the first horizontal or vertical row with the selected object as a reference,
dividing the content data corresponding to the block including the selected block top image into further plurality of sub-blocks,
generating an object corresponding to the sub-block top image which is an image positioned at the top of each sub-block, wherein generation of the object corresponding to the sub-block top image is started, when the operator, which selects the object, moves to an area where no object exists in the display panel where a plurality of objects are displayed,
arranging a plurality of sub-block top images in a time order, and hierarchically displaying them with the selected block top image as a reference.

7. A program which when executed on a computer having a display panel where a plurality of objects of moving picture contents are displayed along a predetermined direction in a first horizontal or vertical row, causes the computer to execute:
an input position detecting function of detecting a position of an operator positioned on the display panel;
a selected object detecting function of detecting the object selected by the operator;
a block dividing function of dividing content data corresponding to the object detected by the selected object detecting function into a plurality of blocks and generating an object corresponding to the block top image which is an image positioned at the top of each block;
a display controlling function of arranging a plurality of block top images in a time order and hierarchically displaying them in the time order along the predetermined direction in a second horizontal or vertical row adjacent to the first horizontal or vertical row with the selected object as a reference,
wherein the block dividing function is configured to divide the content data corresponding to the block including the selected block top image into further plurality of sub-blocks and generates an object corresponding to the sub-block top image which is an image positioned at the top of each sub-block and is configured to start generation of the object corresponding to the sub-block top image, when the operator, which selects the object, moves to an area where no object exists in the display panel where a plurality of objects are displayed, and the display controlling function is configured to arrange a plurality of sub-block top images in a time order and hierarchically display them with the selected block top image as a reference.

## Patentansprüche

1. Informationsverarbeitungsvorrichtung, umfassend:
eine Anzeigetafel (101), die dafür ausgelegt ist, mehrere Objekte mit Bewegtbildinhalt entlang einer vorbestimmten Richtung in einer ersten horizontalen oder vertikalen Reihe anzuzeigen;
eine Eingabepositions-Erkennungseinheit (105), die dafür ausgelegt ist, eine Position eines Bedieners zu erkennen, der auf der Anzeigetafel positioniert ist;
eine Auswahlobjekt-Erkennungseinheit (111), die dafür ausgelegt ist, ein vom Bediener ausgewähltes Objekt zu erkennen;
eine Blockaufteilungseinheit (113), die dafür ausgelegt ist, Inhaltsdaten, die dem von der Auswahlobjekt-Erkennungseinheit erkannten Objekt entsprechen, in mehrere Blöcke aufzuteilen und ein Objekt zu erzeugen, das einem Blockanfangsbild entspricht, welches ein Bild ist, das am Anfang jedes Blocks positioniert ist;
eine Anzeigesteuerungseinheit (107), die dafür ausgelegt ist, mehrere Blockanfangsbilder in einer zeitlichen Reihenfolge anzuordnen und sie hierarchisch in der zeitlichen Reihenfolge entlang der vorbestimmten Richtung in einer zweiten horizontalen oder vertikalen Reihe, die der ersten horizontalen oder vertikalen Reihe benachbart ist, mit dem ausgewählten Objekt als Bezugsobjekt, anzuzeigen,
wobei die Blockaufteilungseinheit (113) dafür ausgelegt ist, die Inhaltsdaten, die dem das ausgewählte Blockanfangsbild beinhaltenden Block entsprechen, in eine weitere Vielzahl von Unterblöcken aufzuteilen, und ein Objekt erzeugt, das dem Unterblockanfangsbild entspricht, welches ein Bild ist, das am Anfang jedes Unterblocks positioniert ist, und dafür ausgelegt ist, mit der Erzeugung des dem Unterblockanfangsbild entsprechenden Objekts zu beginnen, wenn sich der Bediener, welcher das Objekt auswählt, zu einem Bereich bewegt, wo kein Objekt in der Anzeigetafel vorhanden ist, wo mehrere Objekte angezeigt werden, und die Anzeigesteuerungseinheit dafür ausgelegt ist, mehrere Unterblockanfangsbilder in einer zeitlichen Reihenfolge anzuordnen und sie hierarchisch mit dem ausgewählten Blockanfangsbild als Bezugsobjekt anzuzeigen.

2. Informationsverarbeitungsvorrichtung gemäß Anspruch 1, wobei die Blockaufteilungseinheit dafür ausgelegt ist, die Inhaltsdaten basierend auf der zuvor festgelegten Anzahl von Blöcken gleichmäßig aufzuteilen.

3. Informationsverarbeitungsvorrichtung gemäß Anspruch 1, wobei die Blockaufteilungseinheit dafür ausgelegt ist, die Inhaltsdaten jeweils nach einer zuvor festgelegten Aufteilungszeit vom Beginn der Inhaltsdaten an aufzuteilen.

4. Informationsverarbeitungsvorrichtung gemäß Anspruch 1, wobei die Anzeigetafel dafür ausgelegt ist, mehrere Objekte entlang einer seitlichen Richtung in der Anzeigetafel anzuzeigen,
die Blockaufteilungseinheit dafür ausgelegt ist, mit der Erzeugung des dem Blockanfangsbild oder dem Unterblockanfangsbild entsprechenden Objekts zu beginnen, wenn die Bewegungsrichtung des Bedieners, welcher das Objekt auswählt, eine vertikale Richtung ist, und
die Anzeigesteuerungseinheit dafür ausgelegt ist, das erzeugte Blockanfangsbild oder das Unterblockanfangsbild in einer unteren Schicht des Objekts entlang der seitlichen Richtung anzuzeigen.

5. Informationsverarbeitungsvorrichtung gemäß Anspruch 1, wobei die Anzeigetafel dafür ausgelegt ist, mehrere Objekte entlang einer vertikalen Richtung in der Anzeigetafel anzuzeigen,
die Blockaufteilungseinheit dafür ausgelegt ist, mit der Erzeugung des dem Blockanfangsbild oder dem Unterblockanfangsbild entsprechenden Objekts zu beginnen, wenn die Bewegungsrichtung des Bedieners, welcher das Objekt auswählt, eine seitliche Richtung ist, und
die Anzeigesteuerungseinheit dafür ausgelegt ist, das erzeugte Blockanfangsbild oder das Unterblockanfangsbild entlang der vertikalen Richtung rechts oder links vom ausgewählten Objekt anzuzeigen.

6. Informationsverarbeitungsverfahren, die folgenden Schritte umfassend:
Erkennen einer Position eines Bedieners, der auf der Anzeigetafel positioniert ist, wo mehrere Objekte mit Bewegtbildinhalt entlang einer vorbestimmten Richtung in einer ersten horizontalen oder vertikalen Reihe angezeigt werden;
Erkennen des vom Bediener ausgewählten Objekts;
Aufteilen von Inhaltsdaten, die dem erkannten Objekt entsprechen, in mehrere Blöcke und Erzeugen des Objekts, das dem Blockanfangsbild entspricht, welches ein Bild ist, das am Anfang jedes Blocks positioniert ist; und
Anordnen mehrerer Blockanfangsbilder in einer zeitlichen Reihenfolge und hierarchisches Anzeigen derselben in der zeitlichen Reihenfolge entlang der vorbestimmten Richtung in einer zweiten horizontalen oder vertikalen Reihe, die der ersten horizontalen oder vertikalen Reihe benachbart ist, mit dem ausgewählten Objekt als Bezugsobjekt,
Aufteilen der Inhaltsdaten, die dem das ausgewählte Blockanfangsbild beinhaltenden Block entsprechen, in eine weitere Vielzahl von Unterblöcken,
Erzeugen eines Objekts, das dem Unterblockanfangsbild entspricht, welches ein Bild ist, das am Anfang jedes Unterblocks positioniert ist, wobei mit der Erzeugung des dem Unterblockanfangsbild entsprechenden Objekts begonnen wird, wenn sich der Bediener, welcher das Objekt auswählt, zu einem Bereich bewegt, wo kein Objekt in der Anzeigetafel vorhanden ist, wo mehrere Objekte angezeigt werden,
Anordnen mehrerer Unterblockanfangsbilder in einer zeitlichen Reihenfolge und hierarchisches Anzeigen derselben mit dem ausgewählten Blockanfangsbild als Bezugsobjekt.

7. Programm, welches, wenn es auf einem Computer mit einer Anzeigetafel ausgeführt wird, wo mehrere Objekte mit Bewegtbildinhalt entlang einer vorbestimmten Richtung in einer ersten horizontalen oder vertikalen Reihe angezeigt werden, den Computer veranlasst Folgendes auszuführen:
eine Eingabepositions-Erkennungsfunktion des Erkennens einer Position eines Bedieners, der auf der Anzeigetafel positioniert ist;
eine Auswahlobjekt-Erkennungsfunktion des Erkennens des vom Bediener ausgewählten Objekts;
eine Blockaufteilungsfunktion des Aufteilens von Inhaltsdaten, die dem von der Auswahlobjekt-Erkennungsfunktion erkannten Objekt entsprechen, in mehrere Blöcke und des Erzeugens eines Objekts, das dem Blockanfangsbild entspricht, welches ein Bild ist, das am Anfang jedes Blocks positioniert ist;
eine Anzeigesteuerungsfunktion des Anordnens mehrerer Blockanfangsbilder in einer zeitlichen Reihenfolge und hierarchischen Anzeigens derselben in der zeitlichen Reihenfolge entlang der vorbestimmten Richtung in einer zweiten horizontalen oder vertikalen Reihe, die der ersten horizontalen oder vertikalen Reihe benachbart ist, mit dem ausgewählten Objekt als Bezugsobjekt,
wobei die Blockaufteilungsfunktion dafür ausgelegt ist, die Inhaltsdaten, die dem das ausgewählte Blockanfangsbild beinhaltenden Block entsprechen, in eine weitere Vielzahl von Unterblöcken aufzuteilen, und ein Objekt erzeugt, das dem Unterblockanfangsbild entspricht, welches ein Bild ist, das am Anfang jedes Unterblocks positioniert ist, und dafür ausgelegt ist, mit der Erzeugung des dem Unterblockanfangsbild entsprechenden Objekts zu beginnen, wenn sich der Bediener, welcher das Objekt auswählt, zu einem Bereich bewegt, wo kein Objekt in der Anzeigetafel vorhanden ist, wo mehrere Objekte angezeigt werden, und die Anzeigesteuerungsfunktion dafür ausgelegt ist, mehrere Unterblockanfangsbilder in einer zeitlichen Reihenfolge anzuordnen und sie hierarchisch mit dem ausgewählten Blockanfangsbild als Bezugsobjekt anzuzeigen.

## Revendications

1. Appareil de traitement d'informations, comprenant
un panneau d'affichage (101) configuré pour afficher une pluralité d'objets de contenu d'images animées dans un sens prédéterminé dans une première rangée horizontale ou verticale ;
une unité de détection de position d'entrée (105) configurée pour détecter une position d'un opérateur placé sur le panneau d'affichage ;
une unité de détection d'objet sélectionné (111) configurée pour détecter un objet sélectionné par l'opérateur ;
une unité de division en blocs (113) configurée pour diviser les données de contenu correspondant à l'objet détecté par l'unité de détection d'objet sélectionné en une pluralité de blocs et générer un objet correspondant à une image supérieure de bloc qui est une image positionnée sur le dessus de chaque bloc ; et
une unité de commande d'affichage (107) configurée pour agencer une pluralité d'images supérieures de blocs dans un ordre temporel et les afficher hiérarchiquement dans l'ordre temporel dans le sens prédéterminé dans une seconde rangée horizontale ou verticale adjacente à la première rangée horizontale ou verticale avec l'objet sélectionné comme référence,
dans lequel l'unité de division en blocs (113) est configurée pour diviser les données de contenu correspondant au bloc comportant l'image supérieure de bloc sélectionnée en une autre pluralité de sous-blocs et génère un objet correspondant à l'image supérieure de sous-bloc qui est une image positionnée sur le dessus de chaque sous-bloc et est configurée pour lancer la génération de l'objet correspondant à l'image supérieure de sous-bloc, quand l'opérateur, qui sélectionne l'objet, passe à une zone où aucun objet n'existe dans le panneau d'affichage où une pluralité d'objets est affichée, et l'unité de commande d'affichage est configurée pour agencer une pluralité d'images supérieures de sous-blocs dans un ordre temporel et les afficher hiérarchiquement avec l'image supérieure de bloc sélectionnée comme référence.

2. Appareil de traitement d'informations selon la revendication 1, dans lequel l'unité de division en blocs est configurée pour diviser uniformément les données de contenu en fonction du nombre de blocs défini antérieurement.

3. Appareil de traitement d'informations selon la revendication 1, dans lequel l'unité de division en blocs est configurée pour diviser les données de contenu à chaque temps de division défini antérieurement depuis le haut des données de contenu.

4. Appareil de traitement d'informations selon la revendication 1, dans lequel le panneau d'affichage est configuré pour afficher une pluralité d'objets dans un sens latéral dans le panneau d'affichage,
l'unité de division en blocs est configurée pour lancer la génération de l'image correspondant à l'image supérieure de bloc ou l'image supérieure de sous-bloc, quand le sens de déplacement de l'opérateur, qui sélectionne l'objet, est un sens vertical, et
l'unité de commande d'affichage est configurée pour afficher l'image supérieure de bloc ou l'image supérieure de sous-bloc générée dans une couche inférieure de l'objet dans le sens latéral.

5. Appareil de traitement d'informations selon la revendication 1, dans lequel le panneau d'affichage est configuré pour afficher une pluralité d'objets dans un sens vertical dans le panneau d'affichage,
l'unité de division en blocs est configurée pour lancer la génération de l'objet correspondant à l'image supérieure de bloc ou l'image supérieure de sous-bloc, quand le sens de déplacement de l'opérateur, qui sélectionne l'objet, est un sens latéral, et
l'unité de commande d'affichage est configurée pour afficher l'image supérieure de bloc ou l'image supérieure de sous-bloc générée dans le sens vertical sur le côté droit ou le côté gauche de l'objet sélectionné.

6. Procédé de traitement d'information, comprenant les étapes consistant à :
détecter une position d'un opérateur placé sur un panneau d'affichage où une pluralité d'objets de contenu d'images animées est affichée dans un sens prédéterminé dans une première rangée horizontale ou verticale ;
détecter l'objet sélectionné par l'opérateur ;
diviser les données de contenu correspondant à l'objet détecté en une pluralité de blocs et générer l'objet correspondant à l'image supérieure de bloc qui est une image positionnée sur le dessus de chaque bloc ; et
agencer une pluralité d'images supérieures de blocs dans un ordre temporel et les afficher hiérarchiquement dans l'ordre temporel dans le sens prédéterminé dans une seconde rangée horizontale ou verticale adjacente à la première rangée horizontale ou verticale avec l'objet sélectionné comme référence,
diviser les données de contenu correspondant au bloc comportant l'image supérieure de bloc sélectionnée en une autre pluralité de sous-blocs, générer un objet correspondant à l'image supérieure de sous-bloc qui est une image positionnée sur le dessus de chaque sous-bloc, dans lequel la génération de l'objet correspondant à l'image supérieure de sous-bloc est lancée, quand l'opérateur, qui sélectionne l'objet, passe à une zone où aucun objet n'existe dans le panneau d'affichage où une pluralité d'objets est affichée,
agencer une pluralité d'images supérieures de sous-blocs dans un ordre temporel et les afficher hiérarchiquement avec l'image supérieure de bloc sélectionnée comme référence.

7. Programme qui, à son exécution sur un ordinateur doté d'un panneau d'affichage où une pluralité d'objets de contenu d'images animées est affichée dans un sens prédéterminé dans une première rangée horizontale ou verticale, amène l'ordinateur à exécuteur :
une fonction de détection de position d'entrée consistant à détecter une position d'un opérateur placé sur le panneau d'affichage ;
une fonction de détection d'objet sélectionné consistant à détecter l'objet sélectionné par l'opérateur ;
une fonction de division en blocs consistant à diviser les données de contenu correspondant à l'objet détecté par la fonction de détection d'objet sélectionné en une pluralité de blocs et à générer un objet correspondant à l'image supérieure de bloc qui est une image positionnée sur le dessus de chaque bloc ;
une fonction de commande d'affichage consistant à agencer une pluralité d'images supérieures de blocs dans un ordre temporel et à les afficher hiérarchiquement dans l'ordre temporel dans le sens prédéterminé dans une seconde rangée horizontale ou verticale adjacente à la première rangée horizontale ou verticale avec l'objet sélectionné comme référence,
dans lequel la fonction de division en blocs est configurée pour diviser les données de contenu correspondant au bloc comportant l'image supérieure de bloc sélectionnée en une autre pluralité de sous-blocs et génère un objet correspondant à l'image supérieure de sous-bloc qui est une image positionnée sur le dessus de chaque sous-bloc et est configurée pour lancer la génération de l'objet correspondant à l'image supérieure de sous-bloc, quand l'opérateur, qui sélectionne l'objet, passe à une zone où aucun objet n'existe dans le panneau d'affichage où une pluralité d'objets est affichée, et l'unité de commande d'affichage est configurée pour agencer une pluralité d'images supérieures de sous-blocs dans un ordre temporel et les afficher hiérarchiquement avec l'image supérieure de bloc sélectionnée comme référence.
